# EUROPÄISCHE PATENTSCHRIFT

(11) **EP 2 473 377 B1**
(45) Veröffentlichungstag und Bekanntmachung des Hinweises auf die Patenterteilung: **12.04.2017**
(21) Anmeldenummer: 10750092.8
(22) Anmeldetag: 26.08.2010
(51) Int. Cl.: B60R 16/023

(54) **MODULARER STROMVERTEILER**
MODULAR POWER DISTRIBUTOR
RÉPARTITEUR DE COURANT MODULAIRE

(30) Priorität: 03.09.2009 DE 102009029166
(43) Veröffentlichungstag der Anmeldung: 11.07.2012
(60) Teilanmeldung: 15163840.0
(73) Patentinhaber: Lisa Dräxlmaier GmbH, 84137 Vilsbiburg (DE)
(72) Erfinder: FROSCHMEIER, Hubert, 84405 Dorfen (DE); FÜSSL, Peter, 84137 Vilsbiburg (DE)
(86) Internationale Anmeldenummer: PCT/EP2010/062469
(87) Internationale Veröffentlichungsnummer: WO 2011/026780

(56) Entgegenhaltungen:
- EP-A1- 0 972 682
- EP-A1- 1 950 096
- EP-A2- 0 818 356
- EP-A2- 1 029 743
- EP-A2- 1 179 453
- US-A1- 2009 091 183

## Beschreibung

### TECHNISCHES GEBIET

Die vorliegende Erfindung betrifft einen Stromverteiler zur Verwendung in Fahrzeugen, mit einem eine zentrale Stromzufuhr aufweisenden Basismodul und wenigstens zwei an das Basismodul lösbar anbringbaren Universalmodulen.

### HINTERGRUND DER ERFINDUNG

Stromverteiler der angesprochenen Art bilden Knotenpunkte für das elektrische Netzwerk in Kraftfahrzeugen. Sie enthalten mehrere Anschlüsse zur Verbindung mit Verbrauchern und/oder einem oder mehreren Kabelbäumen, zumindest eine Stromzufuhr und ggf. verschiedene elektrische Bauelemente, wie beispielsweise Sicherungen, Relais oder elektronische Bauelemente.

Aus der EP 0 972 682 B1 ist eine Zentralelektrik für Kraftfahrzeuge bekannt, die ein Hauptgerät und daran elektrisch und mechanisch ankoppelbare Nebengeräte aufweist. Das Hauptgerät weist einen parallel zu seiner Längserstreckung verlaufenden, zur Aufnahme von elektrischen Leitern vorgesehenen Leiterkanal auf, wobei an einer Längsseite des Leiterkanals Kupplungsstellen zum Anschluss der Nebengeräte vorhanden sind. Die Nebengeräte sind kompatibel ausgeführt, und die Kupplungsstellen am Hauptgerät sind identisch ausgebildet, so dass die Nebengeräte an eine beliebige Kupplungsstelle angeschlossen werden können. Die Nebengeräte weisen jeweils zumindest eine Sicherung auf. Das Hauptgerät führt im Leiterkanal mehrere elektrische Leiter auf unterschiedlichem Potential.

Die in der EP 0 972 682 B1 offenbarte Zentralelektrik bildet den Oberbegriff des Anspruchs 1. Eine vergleichbare Schaltkreisanordnung geht aus der EP 0 495 422 A2 hervor.

Die EP 0 972 682 B1 beschreibt als Aufgabe, eine Zentralelektrik zu schaffen, deren Hauptgerät eine elektrische und mechanische Ankopplung von zugehörigen Nebengeräten auf flexible und modulare Art und Weise ermöglicht, sodass jedes zur Kupplung mit dem Hauptgerät vorgesehene Nebengerät einer beliebigen freien Kupplungsstelle zugeordnet werden kann.

Mit der obigen Modularisierung und Flexibilisierung steigen allerdings der Platzbedarf und die Anzahl der zu verwendenden Komponenten. Der Grund liegt darin, dass die Zentralelektrik hinsichtlich der Verschalung verschiedener elektrischer Elemente nicht auf einen bestimmten Anwendungsfall, beispielsweise eine bestimmte Ausstattungsvariante, optimiert ist.

Die EP 1029 743 A2 beschreibt ein modulares System mit mehreren elektrischen Funktionseinheiten. Jede der Funktionseinheiten ist mit einer bevorzugt standardisierten mechanischen und/oder elektrischen Schnittstelle ausgestattet.

Die DE 44 22 434 C1 beschreibt elektrische Einrichtungen, die mit einer Zentralelektrik verbindbar und davon lösbar sind, wobei eine Leiterplatte in das Gehäuse der Zentralelektrik einsetzbar ist, die mit elektrischen/elektronischen Bauelementen bestückt sein kann. Ferner sind Leiterbahnen im Gehäuse vorgesehen.

Die DE 101 56 233 A1 beschreibt einen elektrischen Steckkörper mit einem ersten Abschnitt und einem zweiten Abschnitt, wobei der erste Abschnitt einen Einsteckschacht für einen flachen Stecker mit einwärts gerichteten Lamellen aufweist und der zweite Abschnitt mit einer Stromschiene verbindbar ist oder damit verbunden ist.

### KURZE BESCHREIBUNG DER ERFINDUNG

Eine Aufgabe der Erfindung besteht somit darin, einen modularen Stromverteiler zur Verwendung in Fahrzeugen zu schaffen, bei dem unter Beibehaltung der Flexibilität möglichst viele Gleichteile verwendet, die Anzahl der benötigten Komponenten verringert und die Kompaktheit verbessert werden kann.

Die Aufgabe wird mit einem Stromverteiler nach Anspruch 1 gelöst. Vorteilhafte Ausgestaltungen ergeben sich aus den entsprechenden Unteransprüchen.

Der Stromverteiler weist ein Basismodul mit zumindest einer zentralen Stromzufuhr auf. Die Universalmodule weisen definierte Geometrien auf und sind mit dem Basismodul an dafür vorgesehenen Stellen sowohl mechanisch als auch elektrisch lösbar verbunden. Die Universalmodule können hinsichtlich der darin enthaltenen elektrischen Bauteile wiederum unter Berücksichtigung der angeschlossenen Verbraucher (beispielsweise Sonderausstattung, Anhängerkupplung) individuell gestaltet sein. Es sei darauf hingewiesen, dass unter "elektrische Bauteile" die in Stromverteilern für Fahrzeuge üblicherweise vorgesehenen Bauteile, wie etwa Sicherungen, Relais oder elektronische, wie beispielsweise logische, Bausteine, gemeint sind. Erfingdungsgemäß weist das Basismodul neben der zentralen Stromzufuhr zumindest eine Platine und/oder eine Stromschiene (bspw. als Stanzgitter ausgeführt) mit Strom leitenden Pfaden, sowie Kontaktanschlüsse zur Verbindung mit Verbrauchern des Fahrzeugs und/oder zur Verbindung mit einem oder mehreren Kabelbäumen auf. Somit enthält das Basismodul mechanische und elektrische Bauteile, die in mehreren Anwendungsfällen, beispielsweise in jeder Ausstattungsvariante eines Fahrzeugtyps, erforderlich sind und somit von den verschiedenen Universalmodulen gemeinsam genutzt werden können. Auf diese Weise kann die Anzahl der verwendeten Bauelemente verringert und der Stromverteiler kompakter ausgebildet werden, ohne auf die vorteilhafte Flexibilität und Modularität verzichten zu müssen. Mit dem erfindungsgemäßen Stromverteiler wird durch den modularen Aufbau des Stromverteilers mit vielen Gleichteilen ein Produkt geschaffen, das je nach Ausstattung des Fahrzeugs ausgehend von einer Basisausstattung über verschiedene angefügte Universalmodule erweitert werden kann.

Die mechanische Verbindung zwischen den Universalmodulen und dem Basismodul erfolgt über Führungen, wobei im Basismodul jeweils zumindest ein Stift vorgesehen ist, der mit einer entsprechenden Öffnung in dem entsprechenden Universalmodul in Eingriff bringbar ist, um bei der Montage einen Endrastpunkt definiert spürbar zu machen. Der Stift kann in die Öffnung eindringen oder diese durchdringen und ermöglicht neben dem Definieren eines Endrastpunkts eine Verbesserung der Führung. Somit kann das entsprechende Universalmodul sicher und definiert an dem Basismodul lösbar angebracht werden, wobei dadurch die Wahrscheinlichkeit einer Beschädigung der mechanischen und/oder elektrischen Schnittstelle beim Anbring- und/oder Lösevorgang minimiert wird.

Vorzugsweise weist die Platine des Basismoduls elektrische Bauteile, wie beispielsweise Sicherungen, Relais oder andere elektronische Bausteine, auf. Somit wird die Anzahl der von den Universalmodulen gemeinsam genutzten Komponenten erhöht und die Kompaktheit des Stromverteilers weiter verbessert. Vorzugsweise weisen mehrere oder alle Universalmodule identisch ausgebildete Schnittstellen zur mechanischen und elektrischen Verbindung mit dem Basismodul auf, um die Anzahl der verwendeten Gleichteile zu erhöhen und somit die Modularität des Stromverteilers zu verbessern. In einer vorteilhaften Weiterbildung einer solchen Ausgestaltung weisen mehrere oder alle Universalmodule nicht nur definierte Geometrien, sondern identische Geometrien, zumindest im Anschlussbereich, auf. Solche identischen Geometrien können über gemeinsam genutzte Gehäuseformen und/oder Anschlussvarianten erzielt werden. Die Schnittstellen zwischen Basismodul und Universalmodulen können so ausgebildet sein, dass ein Universalmodul an einer beliebigen freien Schnittstelle am Basismodul oder an einer für seine Funktion definierten Schnittstelle angebracht werden kann.

Vorzugsweise erfolgt die elektrische und mechanische Kontaktierung der Universalmodule in dafür vorgesehenen Ausbuchtungen des Basismoduls. Durch diese Maßnahme werden die Kompaktheit des Stromverteilers und die sichere Verbindbarkeit der Universalmodule mit dem Basismodul verbessert.

Vorzugsweise wird der elektrische Kontakt zwischen den Universalmodulen und dem Basismodul über einen Messerkontakt am Universalmodul und einen Lamellenkontakt an der zur Kontaktierung vorgesehenen Stelle des Basismoduls herbeigeführt. Eine solche Verbindung ist bei kompakter Ausgestaltung zuverlässig und kann mit einer geringen Anzahl von Bauteilen hergestellt werden. Je nach Funktion des Universalmoduls können selbstverständlich mehrere Messerkontakte am Universalmodul und mehrere Lamellenkontakte an einer Verbindungsstelle des Basismoduls vorgesehen sein.

Da in Abhängigkeit von den angeschlossenen Verbrauchern auf der Platine des Basismoduls oder beim Anschluss der Universalmodule unterschiedliche, unter Umständen hohe Stromtragfähigkeiten gefordert sein können, für die die auf der Platine vorgesehenen Leitungswege möglicherweise nicht ausreichend dimensioniert sind, ist vorzugsweise vorgesehen, dass die zur Kontaktierung erforderliche Anzahl von Lamellenkontakten an einer Stromschiene angeordnet ist. Das elektrische Bauteil aus zumindest einem Lamellenkontakt und einer Stromschiene ist so konzipiert, dass die für den bzw. die entsprechenden Verbraucher erforderliche Stromtragfähigkeit gegeben ist. Dazu kann ein Stapel von Lamellenkontakten mit einer für die erforderliche Stromtragfähigkeit entsprechend dimensionierten Stromschiene verbunden sein, die wiederum mit der Platine, beispielsweise über gängige Lötpins oder Einsteckkontakte, verbunden ist. Es sind dabei verschiedene Geometrien bei der Gestaltung der Stromschiene denkbar, beispielsweise Metallband, Doppelschiene, L-förmig, U-förmig. Die Verbindung der Lamellenkontakte mit der Stromschiene kann auch derart gestaltet sein, dass die Lamellenkontakte als Einpresskontakte ausgestaltet sind.

### KURZE BESCHREIBUNG DER ZEICHNUNGEN

Im Folgenden werden beispielhafte Ausführungsformen der Erfindung anhand von beigefügten Figuren beschrieben.
Fig. 1A zeigt einen modularen Stromverteiler schräg von oben; Figuren 1B und 1C sind zwei Einzeldarstellungen von zwei unterschiedlichen Universalmodulen.
Fig. 2 zeigt einen modularen Stromverteiler, bestehend aus einem Basismodul und sechs Universalmodulen.
Fig. 3 ermöglicht einen Blick in das Basismodul, wobei eine Platine des Basismoduls erkennbar ist.
Figuren 4A und 4B sind Einzeldarstellungen zweier Universalmodule.
Fig. 5 zeigt den Einschub und die Kontaktierung eines Universalmoduls in die Basisplatine.
Fig. 6 zeigt eine Bodenplatte des Basismoduls schräg von unten.
Figuren 7A bis 7E zeigen verschiedene Ausführungsformen von Stromschienen, teilweise in Verbindung mit einem Lamellenkontakt.

### WEGE ZUR AUSFÜHRUNG DER ERFINDUNG

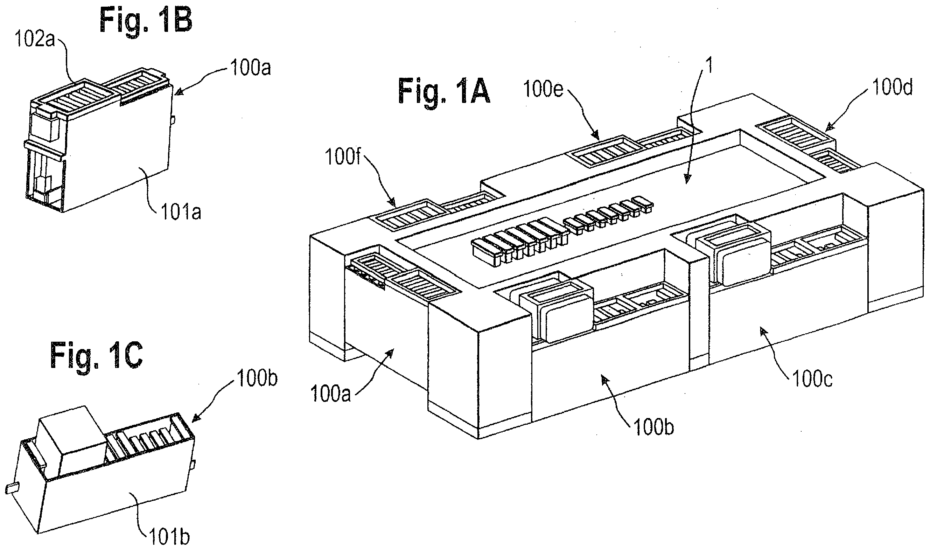

Fig. 1A zeigt einen modularen Stromverteiler in einer Perspektive schräg von oben. Der Stromverteiler weist ein Basismodul 1 und mehrere Universalmodule 100a bis 100f, die an dem Basismodul 1 lösbar angebracht sind, auf. Die Figuren 1B und 1C zeigen Einzeldarstellungen zweier Universalmodule 100a und 100b. Die Universalmodule 100a und 100b weisen jeweils ein Gehäuse 101a bzw. 101b sowie einen Deckel 102a auf. Der Deckel wurde in der Fig. 1C ausgelassen, um einen Blick in das Innere das Universalmoduls 100b zu ermöglichen.

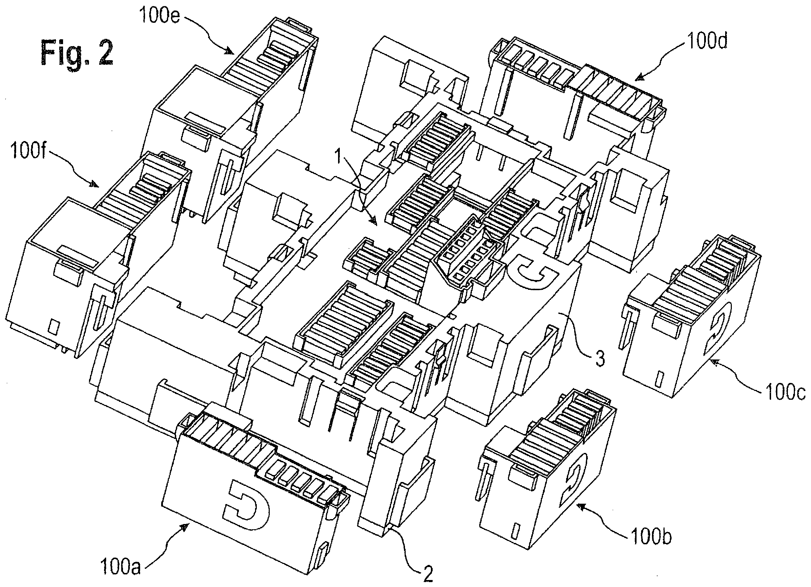

Eine Darstellung mit vom Basismodul 1 getrennten Universalmodulen 100a bis 100f ist in Fig. 2 gezeigt. Das Basismodul weist eine Bodenplatte 2 und eine Abdeckung 3 auf. Wie aus den Figuren hervorgeht, weisen sowohl das Basismodul 1 als auch die Universalmodule 100a bis 100f elektrische Bauteile (z. B. Sicherungen, Relais usw.) und/oder elektronische Bauteile, wie etwa logische Bauteile, auf.

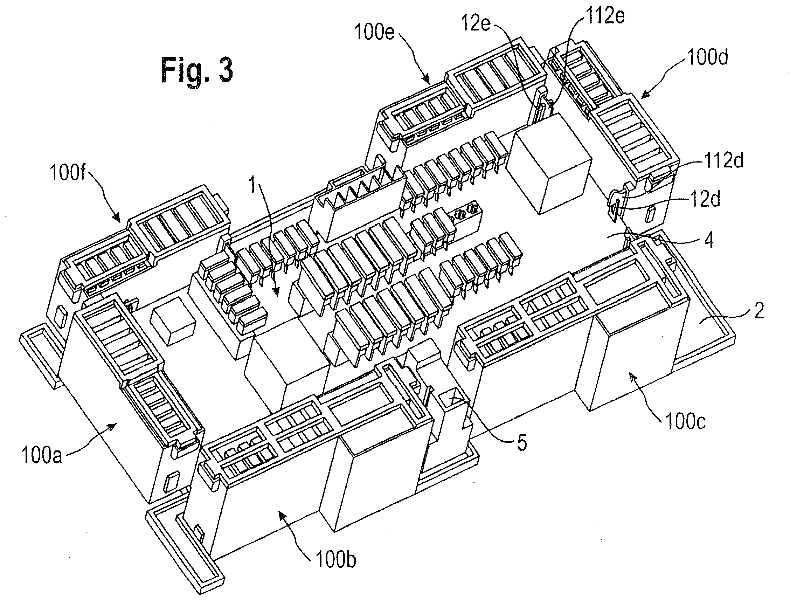

Fig. 3 gewährt einen Blick in das Innere des Basismoduls 1, wobei auf der Bodenplatte 2 eine Platine 4 vorgesehen ist. Nicht dargestellt sind hier Leiterbahnen oder Stromschienen zur Kontaktierung der elektrischen/elektronischen Bauteile. Erkennbar ist die Kontaktierung der Universalmodule 100a bis 100t über einen Messerkontakt an der Platine 4 und einen Lamellenkontakt an der entsprechenden Stelle des Basismoduls 1. Für die Universalmodule 100d und 100e sind die Messerkontakte in der Figur beispielhaft mit 112d und 112e beschriftet. Die entsprechenden Lamellenkontakte zur Aufnahme der Messerkontakte sind mit 12d und 12e beschriftet. Referenzzeichen 5 bezeichnet die zentrale Stromzufuhr des Stromverteilers.

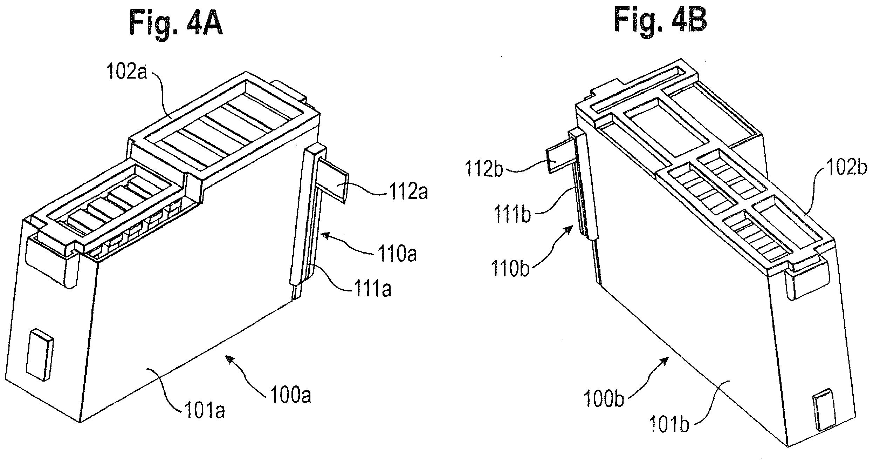

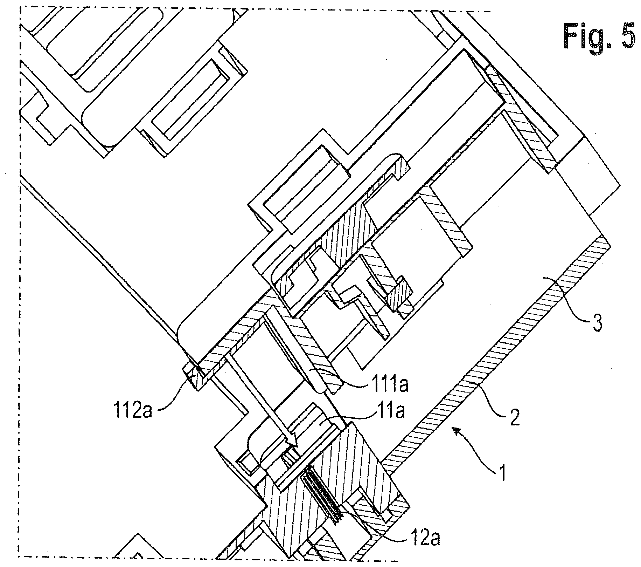

Die Figuren 4A und 4B sind Einzeldarstellungen zweier Universalmodule 100a und 100b. An den beiden Universalmodulen 100a und 100b ist jeweils ein Abschnitt 110a und 110b zur elektrischen und mechanischen Verbindung mit dem Basismodul 1 vorgesehen. Die Abschnitte zur elektrischen und mechanischen Verbindung 110a und 110b weisen jeweils eine mechanische Führung 111a bzw. 111b sowie Messerkontakte 112a bzw. 112b auf. Der Verbindungsvorgang zwischen Universalmodul 100a und Basismodul 1 geht aus der Fig. 5 hervor. Darin ist gezeigt, wie mit Hilfe der Führung 111a und einem entsprechenden Gleitstück 11a am Basismodul 1 das Universalmodul 100a durch Einschieben in eine Ausbuchtung des Basismoduls mit dem Basismodul in Verbindung gebracht wird. Dabei gerät der Messerkontakt 112a des Universalmoduls 100a mit dem Lamellenkontakt 12a in Eingriff.

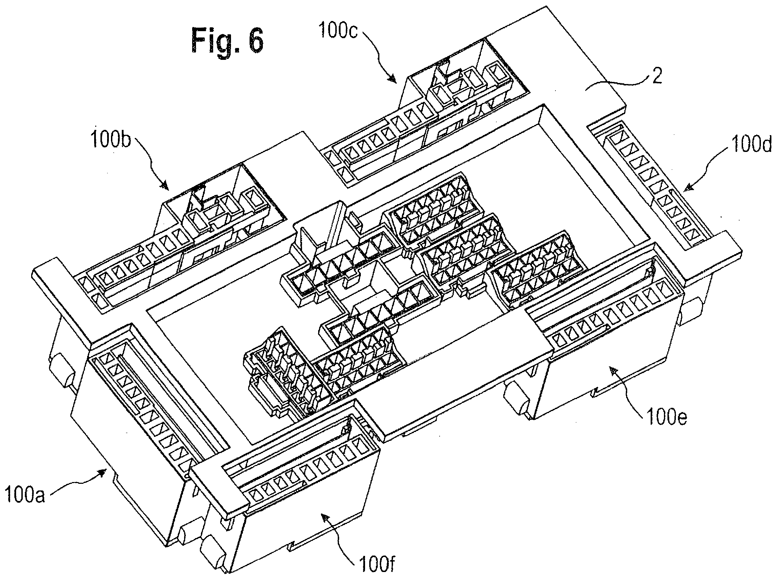

Fig. 6 ist eine perspektivische Ansicht der Bodenplatte des Basismoduls schräg von unten. Über die dargestellten Anschlüsse sowohl auf der Bodenplatte als auch auf der Unterseite der Universalmodule 100a bis 100f erfolgt die Kontaktierung mit dem Kabelbaum bzw. mit den Verbrauchern.

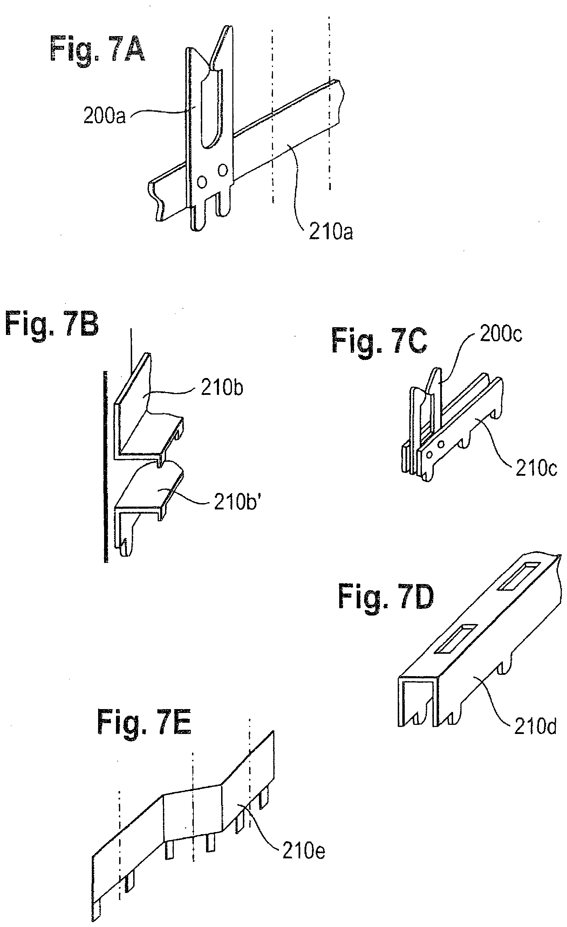

Zur Anpassung und/oder Erweiterung der technischen Spezifikationen des Stromverteilers zeigen die Figuren 7A bis 7E verschiedene Ausführungsformen von Stromschienen 210a bis 210e, teilweise verbunden mit Lamellenkontakten 200a und 200c. Die Stromschienen 210a bis 210e können mit gängigen Lötpins und/oder Einsteckkontakten und/oder mithilfe anderer Kontakte auf der Platine und/oder mit den Universalmodulen verbunden werden. Somit können abhängig von den angeschlossenen Verbrauchern auf der Basisplatine, d. h. der Platine des Basismoduls, oder beim Anschluss der Universalmodule unterschiedliche, auch hohe, Stromtragefähigkeiten realisiert werden, für die die auf der Platine vorgesehenen Leitungswege nicht ausreichend dimensioniert sind.

Es sind verschiedene Geometrien bei der Gestaltung der Stromschiene denkbar. Die Stromschiene kann beispielsweise als Metallband (Fig. 7A), Doppelschiene (Figuren 7B und 7C), L-förmig (Fig. 7B), U-förmig (Fig. 7D) ausgebildet sein. Teilweise sind in den Figuren 7A bis 7E Verbindungspunkte der Stromschienen und/oder Lamellenkontakte mit dafür vorgesehenen Verbindungsstellen des Stromverteilers vorgesehen.

## Patentansprüche

1. Stromverteiler zur Verwendung in Fahrzeugen, mit einem eine zentrale Stromzufuhr (5) aufweisenden Basismodul (1) und wenigstens zwei Universalmodulen (100a, 100b), so dass ein modularer Aufbau des Stromverteilers realisiert wird, wobei die Universalmodule (100a, 100b) definierte Geometrien aufweisen, mit dem Basismodul (1) an dafür vorgesehenen Stellen sowohl mechanisch als auch elektrisch lösbar verbunden werden können und jeweils wenigstens ein elektrisches Bauteil enthalten, wobei
das Basismodul (1) eine Platine (4) mit Strom leitenden Pfaden und/oder zumindest einer Stromschiene, sowie Kontaktanschlüsse zur Verbindung mit Verbrauchern des Fahrzeugs aufweist, **dadurch gekennzeichnet, dass**
die mechanische Verbindung zwischen den Universalmodulen (100a, 100b) und dem Basismodul (1) über Führungen (111a, 111b) erfolgt, wobei im Basismodul (1) jeweils zumindest ein Stift vorgesehen ist, der mit einer entsprechenden Öffnung in dem entsprechenden Universalmodul (100a, 100b) in Eingriff, einbringbar und/oder durchdringbar ist, so dass ein Endrastpunkt bei der Montage der Universalmodule an dem Basismodul definiert spürbar wird.

2. Stromverteiler nach Anspruch 1, **dadurch gekennzeichnet, dass** die Platine (4) des Basismoduls (1) elektrische Bauteile aufweist.

3. Stromverteiler nach Anspruch 1 oder 2, **dadurch gekennzeichnet, dass** mehrere Universalmodule (100a, 100b) identisch ausgebildete Schnittstellen (110a, 110b) zur mechanischen und elektrischen Verbindung mit dem Basismodul (1) aufweisen.

4. Stromverteiler nach einem der vorhergehenden Ansprüche, **dadurch gekennzeichnet, dass** die elektrische und mechanische Kontaktierung der Universalmodule (100a, 100b) in dafür vorgesehenen Ausbuchtungen des Basismoduls (1) erfolgt.

5. Stromverteiler nach einem der vorhergehenden Ansprüche, **dadurch gekennzeichnet, dass** der elektrische Kontakt zwischen den Universalmodulen (100a, 100b) und dem Basismodul (1) über einen Messerkontakt (112a, 112b) am Universalmodul (100a, 100b) und einen Lamellenkontakt (12a, 12b) an der zur Kontaktierung vorgesehenen Stelle am Basismodul (1) herbeigeführt wird.

6. Stromverteiler nach Anspruch 5, **dadurch gekennzeichnet, dass** zumindest einer der zur Kontaktierung vorgesehenen Lamellenkontakte (12a, 12b, 200a - 200e) an einer im oder am Basismodul (1) vorgesehen Stromschiene (210a - 210e) befestigt ist.

7. Stromverteiler nach Anspruch 6, **dadurch gekennzeichnet, dass** die Stromschiene (210a - 210e) mit der Platine (4) über Lötverbindungen oder Einsteckkontakte verbunden ist.

8. Stromverteiler nach Anspruch 6 oder 7, **dadurch gekennzeichnet, dass** die Stromschiene (210a - 210e) L-förmig, als Metallband, als Doppelschiene und/oder U-förmig ausgebildet ist.

## Claims

1. Power distributor for use in vehicles, comprising a base module (1), which has a central power supply (5), and at least two universal modules (100a, 100b), so that a modular construction of the power distributor is realized, wherein the universal modules (100a, 100b) have defined geometries, can be both mechanically and also electrically releasably connected to the base module (1) at areas which are provided for this purpose, and each contain at least one electrical component, wherein
the base module (1) has a printed circuit board (4) with current-conducting paths and/or at least one busbar, and also contact connections for connection to loads of the vehicle, **characterized in that**
the mechanical connection between the universal modules (100a, 100b) and the base module (1) is made by means of guides (111a, 111b), wherein respectively at least one pin is provided in the base module (1), the said pin engaging with a corresponding opening in the corresponding universal module (100a, 100b), can be inserted and/or can pass through, so that a final latching point can be traced in a defined manner when the universal modules are mounted on the base module.

2. Power distributor according to Claim 1, **characterized in that** the printed circuit board (4) of the base module (1) has electrical components.

3. Power distributor according to Claim 1 or 2, **characterized in that** a plurality of universal modules (100a, 100b) have identical interfaces (110a, 110b) for mechanical and electrical connection to the base module (1).

4. Power distributor according to one of the preceding claims, **characterized in that** electrical and mechanical contact is made with the universal modules (100a, 100b) in recesses in the base module (1) which are provided for this purpose.

5. Power distributor according to one of the preceding claims, **characterized in that** the electrical contact between the universal modules (100a, 100b) and the base module (1) is established by means of a blade contact (112a, 112b) on the universal module (100a, 100b) and a laminated contact (12a, 12b) at that area on the base module (1) which is provided for making contact.

6. Power distributor according to Claim 5, **characterized in that** at least one of the laminated contacts (12a, 12b, 200a-200e) which is provided for making contact is fastened to a busbar (210a-210e) which is provided in or on the base module (1).

7. Power distributor according to Claim 6, **characterized in that** the busbar (210a-210e) is connected to the printed circuit board (4) by means of solder connections or plug-in contacts.

8. Power distributor according to Claim 6 or 7, **characterized in that** the busbar (210a-210e) is L-shaped, in the form of a metal strip, in the form of a twin rail and/or U-shaped.

## Revendications

1. Boîtier de distribution électrique destiné à être utilisé dans des véhicules, comprenant un module de base (1) qui possède une arrivée de courant centrale (5) et au moins deux modules universels (100a, 100b), de sorte qu'une construction modulaire du boîtier de distribution électrique soit réalisée, les modules universels (100a, 100b) présentant des formes géométriques définies, pouvant être reliés de manière amovible au module de base (1) à la fois mécaniquement et électriquement à des endroits prévus à cet effet et contenant respectivement au moins un composant électrique,
le module de base (1) possédant une platine (4) dotée de chemins conducteurs d'électricité et/ou au moins une barre-bus, ainsi que des bornes de contact destinées à la connexion avec des consommateurs du véhicule, **caractérisé en ce que**
la liaison mécanique entre les modules universels (100a, 100b) et le module de base (1) s'effectue par le biais de guides (111a, 111b), au moins une broche se trouvant respectivement dans le module de base (1), laquelle étant mise en prise avec une ouverture correspondante dans le module universel (100a, 100b) correspondant, peut être introduite et/ou peut traverser, de sorte qu'un point d'enclenchement final peut être perçu de manière définie lors du montage des modules universels sur le module de base.

2. Boîtier de distribution électrique selon la revendication 1, **caractérisé en ce que** la platine (4) du module de base (1) possède des composants électriques.

3. Boîtier de distribution électrique selon la revendication 1 ou 2, **caractérisé en ce que** plusieurs modules universels (100a, 100b) possèdent des interfaces (110a, 110b) de configuration identique pour la connexion mécanique et électrique avec le module de base (1).

4. Boîtier de distribution électrique selon l'une des revendications précédentes, **caractérisé en ce que** la mise en contact mécanique et électrique des modules universels (100a, 100b) s'effectue dans des creux prévus à cet effet du module de base (1).

5. Boîtier de distribution électrique selon l'une des revendications précédentes, **caractérisé en ce que** le contact électrique entre les modules universels (100a, 100b) et le module de base (1) est établi par le biais d'un contact à lame (112a, 112b) sur le module universel (100a, 100b) et d'un contact à lamelles (12a, 12b) à l'endroit sur le module de base (1) qui est prévu pour la mise en contact.

6. Boîtier de distribution électrique selon la revendication 5, **caractérisé en ce qu'**au moins l'un des contacts à lamelles (12a, 12b, 200a - 200e) prévus pour la mise en contact est fixé sur une barre-bus (210a - 210e) présente sur ou dans le module de base (1).

7. Boîtier de distribution électrique selon la revendication 6, **caractérisé en ce que** la barre-bus (210a - 210e) est reliée à la platine (4) par le biais de liaisons brasées ou de contacts à enficher.

8. Boîtier de distribution électrique selon la revendication 6 ou 7, **caractérisé en ce que** la barre-bus (210a - 210e) est réalisée en forme de L, sous la forme d'une bande métallique, sous la forme d'une double barre et/ou en forme de U.
